# EUROPEAN PATENT SPECIFICATION

(11) **EP 4 500 191 B1**
(45) Date of publication and mention of the grant of the patent: **25.03.2026**
(21) Application number: 23718606.9
(22) Date of filing: 29.03.2023
(51) Int. Cl.: B26B 21/40, B26B 21/56, G01Q 30/04, G01Q 60/38

(54) **BLADE EDGE TIP MEASUREMENT**
VERMESSUNG DER KLINGENSPITZE
MESURE DU BORD DE LA LAME

(30) Priority: 31.03.2022 US 202263326210 P
(43) Date of publication of application: 05.02.2025
(73) Proprietor: The Gillette Company LLC, Boston, Massachusetts 02127 (US)
(72) Inventor: SLATTERY, Jason Scott, Boston, Massachusetts 02127 (US); CLAUS, Oliver Heinz, Boston, Massachusetts 02127 (US); BAXTER, Michael Joseph, Boston, Massachusetts 02127 (US); MAZIARZ, John Lawrence, Boston, Massachusetts 02127 (US); ODONKOR, Nathan Saki, Boston, Massachusetts 02119 (US); JOLLEY, William Owen, Sutton, Massachusetts 01590 (US)
(74) Representative: P&G Patent Germany
(86) International application number: PCT/US2023/065077
(87) International publication number: WO 2023/192888

(56) References cited:
- KR-B1- 101 036 192
- CHEN ZHE ET AL: "Atomic Force Microscopy (AFM) Analysis of an Object Larger and Sharper than the AFM Tip", MICROSCOPY AND MICROANALYSIS, vol. 25, no. 05, 1 October 2019 (2019-10-01), pages 1106 - 1111, XP093057450, ISSN: 1431-9276, Retrieved from the Internet <URL:https://www.cambridge.org/core/services/aop-cambridge-core/content/view/F57497E3721FAD9B1611EBAF7AFB06F8/S1431927619014697a.pdf/atomic-force-microscopy-afm-analysis-of-an-object-larger-and-sharper-than-the-afm-tip.pdf> DOI: 10.1017/S1431927619014697
- ANONYMOUS: "ScanAsyst - Air | Silicon Nitride Probes", 1 January 2023 (2023-01-01), XP093057825, Retrieved from the Internet <URL:https://www.brukerafmprobes.com/p-3726-scanasyst-air.aspx> [retrieved on 20230626]
- ANONYMOUS: "Cutting edge measurement with the AFSEM", 9 December 2021 (2021-12-09), pages 1 - 3, XP093057454, Retrieved from the Internet <URL:https://www.qd-microscopy.com/wp-content/uploads/2021/12/Cutting-edge-measurements-with-the-AFSEM.pdf> [retrieved on 20230623]
- ANONYMOUS: "razor blade measured by AFM - Google Search", 23 June 2023 (2023-06-23), pages 1 - 2, XP093057455, Retrieved from the Internet <URL:https://www.google.com/search?q=razor+blade+measured+by+AFM&rlz=1C1GCEB_enNL875NL875&oq=razor+blade+measured+by+AFM&aqs=chrome..69i57j33i160.14377j1j7&sourceid=chrome&ie=UTF-8> [retrieved on 20230623]

## Description

### FIELD OF THE INVENTION

The present invention relates generally to manufacturing processes for razor blades and the design of blade arrays for razor cartridges and, more particularly, to methods of using blade inspection technology for optimizing manufacturing processes for razor blades and for optimizing a blade array of a razor cartridge using spatial information for a tip portion of a razor blade.

### BACKGROUND OF THE INVENTION

There are numerous methods and apparatus currently in use to measure and determined spatial information for razor blades. However, there is a need for a way to use these measurements and spatial information to improve blade edge design and understand the connection between blade characteristics, the manufacturing processes used to manufacture the razor blades, and the design of the blade arrays and cartridges the razor blades are ultimately used in. It would be beneficial to be able to use the measurements and spatial information obtained to determine the likelihood of skin damage, to determine how blade edges, hair, and skin interact, to provide insight into implementation of the razor blades into a blade array and/or into razor cartridges, and/or to understand drivers of cutting performance methods such as wool felt cutting and single fiber cut force, which would reduce the cutting force needed to cut hair.

Chen, et al. Microscopy and Microanalysis (2019), 25, 1106- 1111, discusses the use of atomic force microscopy (AFM) in the analysis of relatively flat surfaces with topographic features smaller than the height of the AFM tip.

"Cutting edge measurement with the AFSEM", retrieved from https://www.qd-microscopy.com/wp-content/uploads/2021/12/Cutting-edge-measurements-with-the-AFSEM.pdf discusses the use of complementary information from SEM and AFM to image complex samples like razor blades.

KR101036192B1 discusses (abstract) a razor blade inspecting method comprising the step of mounting in the inspection table the razor blade, the step of measuring to be the three-dimensional coordinate measuring machine the first flat plane, the step of obtaining 3D top profile of the test material it obtains the top slope the slope is amended based on the measured value the first inclined plane tilted and extended in the first flat plane of the test material is measured to be the three-dimensional coordinate measuring machine after the previous step, the step of measuring to be the three-dimensional coordinate measuring machine the second flat plane, the step of obtaining 3D lower shape of the test material it obtains the lower part slope the slope is amended based on the measured value the second slope tilted and extended in the second flat plane of the test material is measured to be the three-dimensional coordinate measuring machine after the previous step, and step of completing with final the blade angle and shape of the test material it integrates 3D top obtained through previous steps and lower shape.

### SUMMARY OF THE INVENTION

In accordance with claim 1 of the invention, a method of optimizing a manufacturing process using spatial information for a tip portion of a razor blade comprises the steps of: measuring, using an atomic force microscope including a probe having a high aspect ratio of a length to a half side angle and a probe tip with a radius less than a radius of an ultimate tip of the tip portion of the razor blade, the spatial information by traversing the probe across the tip portion of the razor blade; analyzing, by one or more processors, the spatial information as measured by the atomic force microscope, to determine one or more blade characteristics; and using the blade characteristics to adjust the manufacturing process to improve a design of the razor blade.

The radius of the probe tip can be less than or equal to 1/3 the radius of the ultimate tip of the razor blade.

The probe can be traversed across the tip portion of the razor blade in a direction orthogonal to a longitudinal axis of the ultimate tip of the razor blade.

Measuring can include traversing the probe from the ultimate tip to 4 micrometers on each side of the ultimate tip.

The method can comprise positioning the probe at a first longitudinal position along the razor blade, where the step of measuring includes measuring first positional data with the probe at the first longitudinal position and approaching the razor blade from a first direction and measuring second positional data with the probe at the first longitudinal position and approaching the razor blade from a second direction, opposite the first direction.

Analyzing can include generating a two-dimensional representation of the tip portion of the razor blade at the first longitudinal position based on an average of the first positional data and the second positional data.

The method can comprise positioning the probe at multiple longitudinal positions along the razor blade, where the step of measuring includes measuring first positional data with the probe at each longitudinal position approaching the razor blade from a first direction and measuring second positional data with the probe at each longitudinal position approaching the razor blade from a second direction, opposite the first direction. Each longitudinal position can be at least 30 nanometers from adjacent longitudinal positions and analyzing can include generating a three-dimensional representation of the tip portion of the razor blade based on the first positional data and the second positional data measured at the multiple longitudinal positions and/or generating a Finite Element Analytical model of the tip portion of the razor blade and modeling an interaction of the Finite Element Analytical model against skin.

Analyzing can include determining at least one of: a radius of the ultimate tip, a departure angle, a tip-to-bevel transition, a tip width, a cross-sectional area, or a tip volume.

The radius of the probe tip can range up to 7 nanometers.

The aspect ratio can be at least 1 micron per degree or about 1.5 microns per degree.

The manufacturing process can be a sharpening process, a coating process, an electrochemical process, or any combination thereof. If a sharpening process, the adjustment to the sharpening process can include at least one of: changing a pitch of a grinding wheel, creating a new grinding wheel, or changing a configuration of a grinding machine. If a coating process, the adjustment to the coating process can include changing a configuration of a coating machine. The coating machine could be configured to coat at least a portion of the razor blade.

### BRIEF DESCRIPTION OF THE DRAWINGS

While the specification concludes with claims particularly pointing out and distinctly claiming the subject matter that is regarded as forming the present invention, it is believed that the invention will be better understood from the following description, which is taken in conjunction with the accompanying drawings in which like designations are used to designate substantially identical elements, and in which:
FIG. 1 is a schematic front view of an example razor system;
FIG. 2 is a schematic perspective view of a symmetrical razor blade, which can be used in the razor system of Fig. 1;
FIGS. 3A and 3B are schematic side views of asymmetric razor blades, which can be used in the razor system of Fig. 1;
FIG. 4 is a schematic side view of an example atomic force microscope with by razor blade of Fig. 2;
FIG. 5 is a diagrammatic view illustrating a thickness profile of the ultimate tip of the razor blade of Fig. 2;
FIG. 6 is a flow chart illustrating an example method for optimizing a manufacturing process of a razor blade using spatial information for a razor blade obtained by an AFM;
FIG. 7 is an example image of a two-dimensional representation of the ultimate tip of a razor blade produced using spatial information for a razor blade obtained by an AFM;
FIGS. 8A and 8B are example images of three-dimensional representations of the ultimate tip of a razor blade produced using spatial information for a razor blade obtained by an AFM;
FIG. 9 is an example image of a Finite Element Analysis of an example blade against skin produced using spatial information for a razor blade obtained by an AFM; and
FIG. 10 is a flow chart illustrating an example method for optimizing a blade array of a razor cartridge using spatial information for a razor blade obtained by an AFM.

### DETAILED DESCRIPTION OF THE INVENTION

The example methods described herein use the measurements of an ultimate tip of a razor blade by an AFM, and spatial information determined based on these measurements, to optimize manufacturing processes for the razor blade and/or optimize a blade array of a razor cartridge. The AFM can utilize a high aspect ratio cantilevered probe (~7 nm probe) that collects information from the ultimate tip of the razor blade, which can be used to determine the geometry of the ultimate tip while minimizing damage or artifacts from constant contact. A razor blade can be presented with a longitudinal axis of the razor blade orthogonal to a first direction of AFM probe travel. A complementary reverse second direction of AFM probe travel can also be employed to produce an additional scan to minimize method artifacts and identify abnormalities from the blade edge substrate. As a result of these scans, spatial information can be determined to reveal information from the peak of the tip down to about 4 micrometers. To further improve consistency, the ultimate tip of the razor blade can be scanned at multiple locations along the length or longitudinal axis of the razor blade. The spatial information determined from the scan can be analyzed via viable software-based scripts capable of further revealing a quantitative measure of the geometry of the ultimate tip by fitting the spatial information into a polynomial curve. Measurement obtained via an AFM can provide insights into various edge features from substrates in various states of manufacture, including as-sharpened, sputtered, and sintered conditions, benefitting both hair and skin interactions of the razor blade. In addition, another application of this measurement is the evaluation of post-shave razor blade characteristics, such as wear and damage.

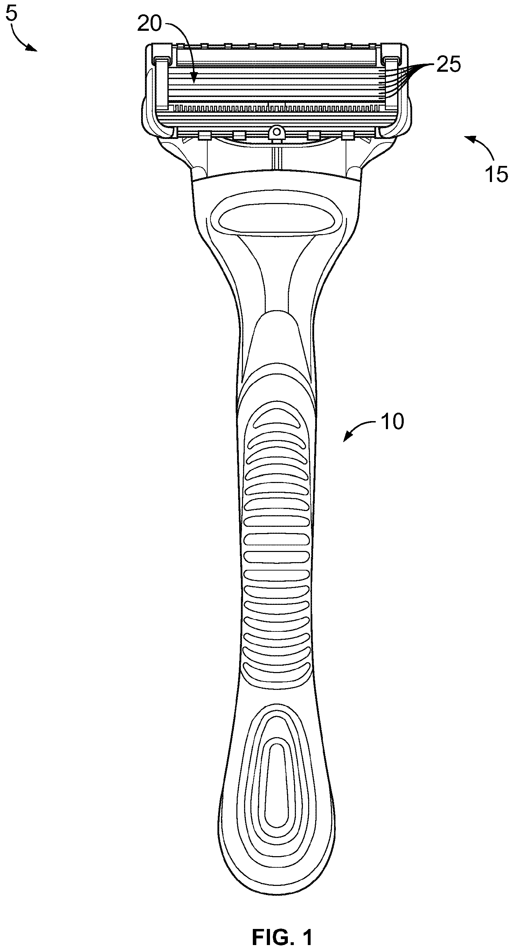

Referring to Fig. 1, a front view of an example razor system 5 is shown. Razor system 5 includes a handle 10 and a razor cartridge 15. Razor cartridge 15 may include a blade array 20 having a plurality of razor blades 25.

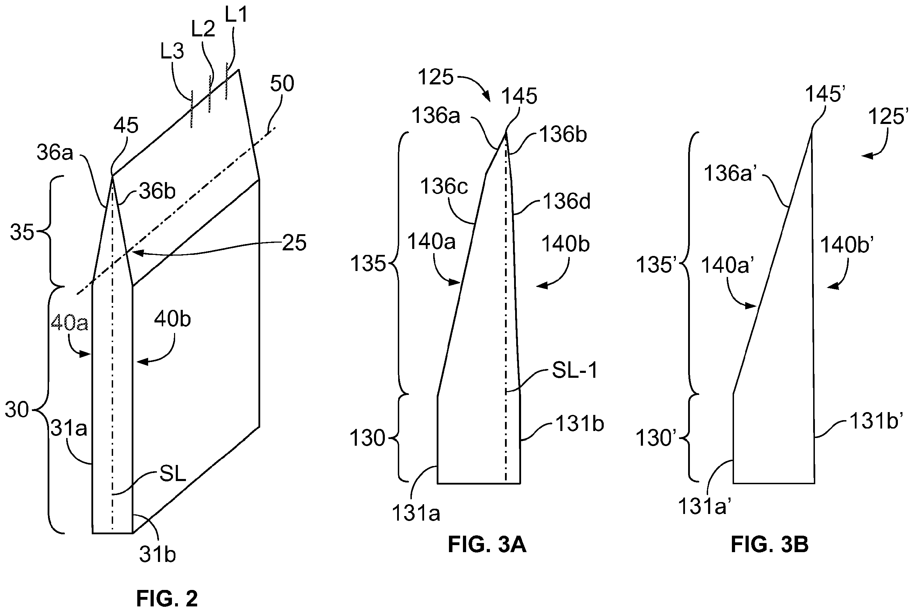

Referring to Fig. 2, an example razor blade 25 includes a body portion 30 and a tip portion 35. Body portion 30 may comprise first and second generally planar and parallel outer surfaces 31a, 31b, and tip portion 35 may comprise first and second facets or flanks 36a, 36b that extend inwardly from first and second outer surfaces 31a, 31b of body portion 30, respectively. First flank 36a and first outer surface 31a may form a first outer side 40a of razor blade 25 and second flank 36b and second outer surface 31b may form a second outer side 40b of razor blade 25. First and second outer sides 40a, 40b, specifically first and second flanks 36a, 36b of tip portion 35, converge at an ultimate tip 45 of razor blade 25. Ultimate tip 38 of razor blade 25 may serve as a cutting edge for cutting hair when razor blade 25 is incorporated into razor cartridge 15 of razor system 5. Razor blade 25 may further comprise a split line SL which passes through ultimate tip 45 and is generally parallel to first and second outer surfaces 31a, 31b of body portion 30. First and second outer sides 40a, 40b are disposed opposite split line SL. Fig. 2 shows a symmetric example of razor blade 25, in which first and second outer sides 40a, 40b are mirror images of each other around split line SL.

Figs. 3A and 3B show examples of asymmetric razor blades 125, 125'. Each asymmetric razor blade 125, 125' similarly comprises a respective body portion 130, 130' and tip portion 135, 135'. However, tip portion 135, 135' of asymmetric razor blades 125, 125' may comprise differing numbers of flanks, bevels, and/or other surface features. For example, tip portion 135 of asymmetric razor blade 125 in Fig. 3A comprises first and second facets or flanks 136a, 136b, as well as third and fourth facets or flanks 136c, 136d. Third and fourth flanks 136c, 136d may extend inwardly from first and second outer surfaces 131a, 13ab of the asymmetric razor blade 125, in which the first and second outer surfaces 131a, 131b are generally planar and parallel with each other. The first and second flanks 136a, 136b may extend inwardly from the third and fourth flanks 136c, 136d, respectively. First flank 136a, third flank 136c, and first outer surface 131a may form a first outer side 140a of the asymmetric razor blade 125. Second flank 136b, fourth flank 136d, and second outer surface 131b may form a second outer side 140b of the asymmetric cutting member 125. First and second outer sides 140a, 140b, specifically first and second flanks 136a, 136b, may converge at an ultimate tip 145 in tip portion 135 of asymmetric razor blade 125. Ultimate tip 145 of asymmetric razor blade 125 may serve as a cutting edge for cutting hair when the asymmetric razor blade 125 is incorporated into razor cartridge 15 of razor system 5. Asymmetric razor blade 125 may further comprise a split line SL-1 that passes through ultimate tip 145 and is generally parallel to first and second outer surfaces 131a, 131b of body portion 130.

Tip portion 135' of the asymmetric razor blade 125' in Fig. 3B comprises only one facet or flank, first flank 136a', that extends inwardly from a first outer surface 131a'. First outer surface 131a' and second outer surface 131b' of the asymmetric razor blade 125' are generally planar and parallel with each other. First flank 136a' and first outer surface 131a' may form a first outer side 140a' of the asymmetric razor blade 125'. Second outer surface 131b' may form a second outer side 140b' of the asymmetric razor blade 125'. First and second outer sides 140a', 140b', specifically first flank 136a' and the second outer surface 131b', may converge at ultimate tip 145' in tip portion 135' of the asymmetric razor blade 125'. As shown in Fig. 3B, second outer side 140b' may comprise a continuous, planar surface that extends from ultimate tip 145' toward body portion 130'. Ultimate tip 145' of the asymmetric razor blade 125' may serve as a cutting edge when asymmetric razor blade 125' is incorporated into razor cartridge 15 of razor system 5.

While the razor blades in the schematic illustrations of an atomic force microscope below are shown and discussed with respect to symmetric razor blade 25, it should be appreciated that asymmetric razor blades 125 and 125', or any other example of an asymmetric razor blade, may also be used.

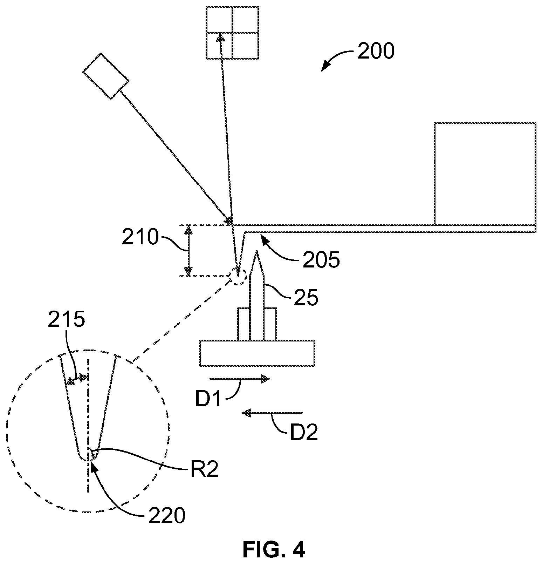

With reference to the example razor blade 25 shown in Fig. 2, spatial information about razor blade 25, and more specifically tip portion 35, are determined using an atomic force microscope (AFM) 200, such as commercially available instruments capable of non-contact operation with appropriate tips, as described in more detail below. Atomic force microscopy is a high precision technique, which offers high vertical and lateral resolutions on a wide variety of surface types with vertical resolution that is at least an order of magnitude better than a scanning electron microscope. Referring to Fig. 4, AFM 200 includes a probe 205 that has a high aspect ratio of a length 210 of probe 205 to a half side angle 215. For example, the aspect ratio can be at least 1 micron per degree and is could be about 1.5 microns per degree or 14 microns per 9 degrees. In addition, probe 205 has a probe tip 220 that has a radius R2 that is less than a radius R1 of ultimate tip 45 of tip portion 35 of razor blade 25. For example, the radius R2 of probe tip 220 could be less than or equal to 1/3 the radius R1 of ultimate tip 45 of razor blade 25 and preferably ranges up to 7 nanometers. Probe 205 of the present invention is comprised of a cantilevered stylus. The present invention further contemplates that probe 205 is not stiff, but relatively flexible. For instance, probe 205 of the present invention can exhibit a spring constant of about 26 N/m. A flexible probe is advantageous in that it assists in the interaction with a sharp feature resulting in a lower likelihood of failure.

The spatial information about razor blade 25 may be obtained for all or part of tip portion 35 of razor blade 25. For example, spatial information may be obtained for part of the tip portion 35, *e.g.,* from ultimate tip 45 to 4 micrometers on each side of ultimate tip 45. In other examples, spatial information may be obtained for an entirety of the tip portion 35, *e.g.,* from ultimate tip 45 back to where first and second flanks 36a, 36b join body portion 30.

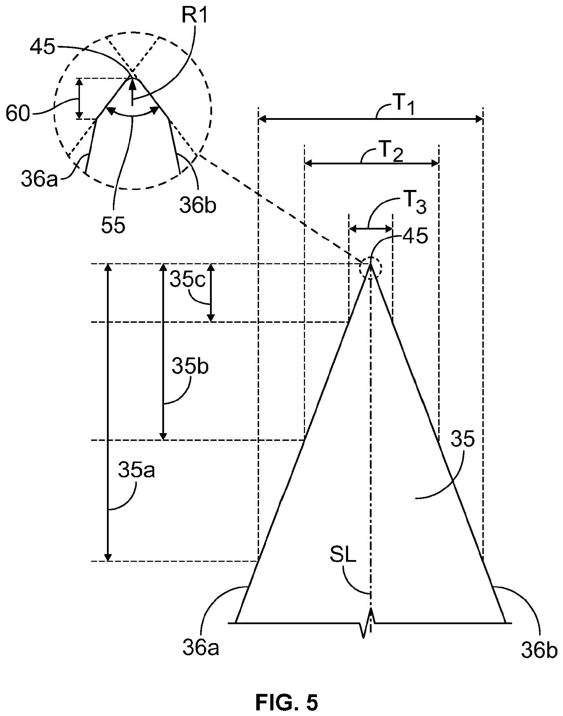

Generally, spatial information can be considered two-dimensional or three-dimensional topography, which can be characterized as a collection of points defined by their coordinate locations, relative to each other or to a datum. One example of spatial information that may be obtained is shown in Fig. 5, which depicts an example two-dimensional representation, or thickness profile, of tip portion 35 of razor blade 25. Data produced by AFM 200 for both sides of razor blade 25 may be combined to produce the thickness profile. The thickness profile can provide a variety of information regarding tip portion 35 of razor blade 25, such as a radius R1 of ultimate tip 45, a departure angle 55, a tip-to-bevel transition 60, a tip width, a cross-sectional area of tip portion 35, etc. The departure angle 55 is the angle between two lines that are tangent to the tip radius or the angle taken within the blade tip at about 0.25 micrometers back from ultimate tip 45. The tip-to-bevel transition 60 represents the transition point from one bevel to the next taken from the blade tip. The tip width can be determined at any desired position along split line SL of tip portion 35. For example, a first tip width T1 can be determined at a first distance 35a from ultimate tip 45 of razor blade 25 along the split line SL; a second tip width T2 can be determined at a second distance 35b from ultimate tip 45 of the razor blade 25 along the split line SL; and a third tip width T3 can be determined at a third distance 35c from ultimate tip 45 of razor blade 25 along the split line SL. Other examples of spatial information that may be obtained using a three-dimensional representation of tip portion 35 of razor blade 25 include created with data produced by AFM 200 at multiple longitudinal positions along razor blade 25 include a tip volume, etc.

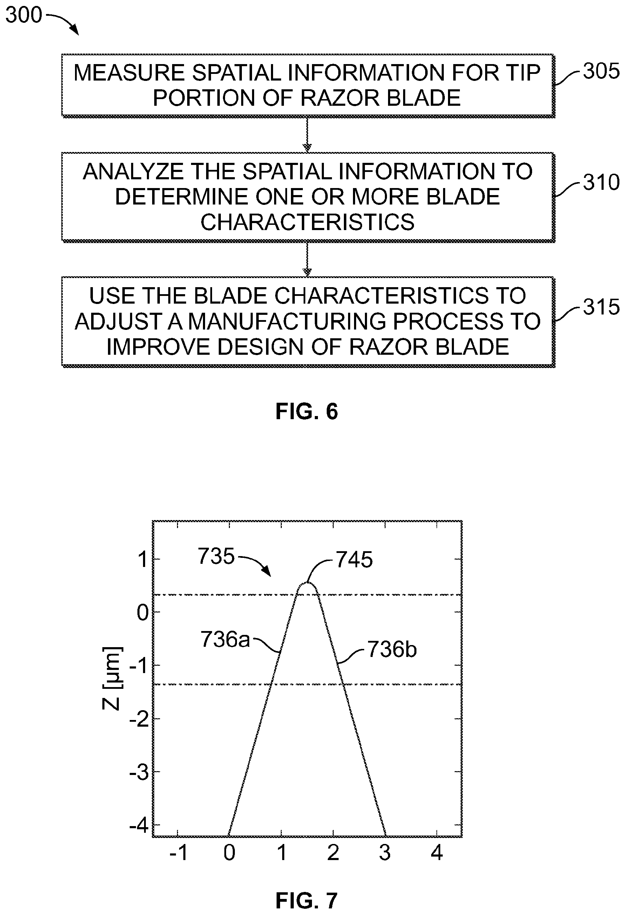

A method 300 for optimizing a manufacturing process using spatial information, such as that discussed above, for tip portion 35 of razor blade 25 is illustrated in the flow diagram of Fig. 6. While method 300 is described below with respect to symmetric razor blade 25, it should be appreciated that the described method 300 may also be used with asymmetric razor blades 125 and 125', or any other example of an asymmetric razor blade.

At step 305, AFM 200 with probe 205 is used to measure spatial information for tip portion 35 of razor blade 25 by traversing probe 205 across tip portion 35 of razor blade 25, preferably by traversing probe 205 across tip portion 35 in a direction orthogonal to a longitudinal axis 50 of ultimate tip 45 of razor blade 25 and from ultimate tip 45 to 4 micrometers on each side of ultimate tip 45 *(e.g.,* from 0.5 micrometers to 4 micrometers). As best shown in Figs. 2 and 4, the spatial information can be obtained by positioning probe 205 at a first longitudinal position L1 along razor blade 25 and measuring first positional data with probe 205 at first longitudinal position L1 and approaching razor blade 25 from a first direction D1 and measuring second positional data with probe 205 at first longitudinal position L1 and approaching razor blade 25 from a second direction D2, opposite the first direction D1. In addition, the spatial information can be obtained by positioning probe 205 at multiple longitudinal positions L1, L2, L3, which are preferably at least 30 nanometers from adjacent longitudinal positions, along razor blade 25 and measuring first positional data with probe 205 at each longitudinal position L1, L2, L3 and approaching razor blade 25 from the first direction D1 and measuring second positional data with probe 205 at each longitudinal position L1, L2, L3 and approaching razor blade 25 from the second direction D2, opposite the first direction D1 (*e.g*., traveling along the same plane in opposite directions).

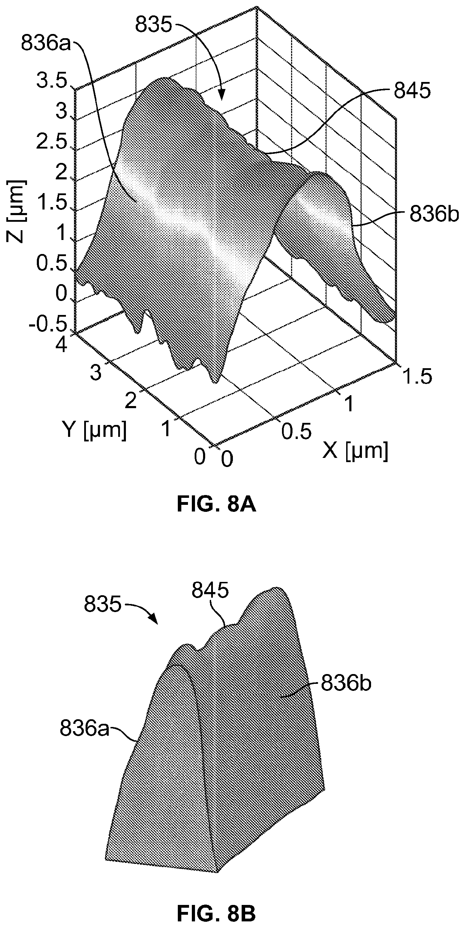

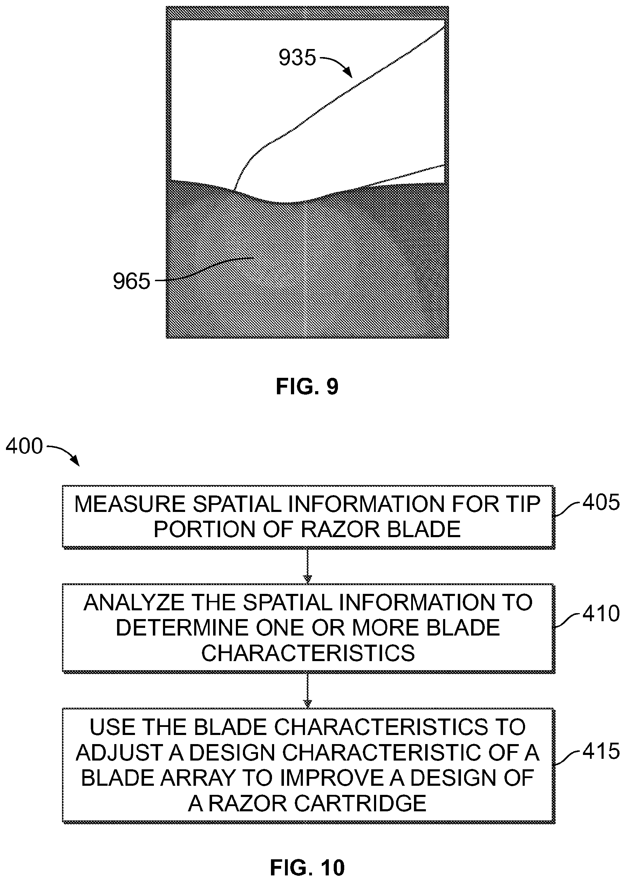

At step 310, one or more processors are used to analyze the spatial information as measured by AFM 200 *(e.g.,* using software-based scripts) to determine one or more characteristics of blade 25. For example, the spatial information can be used to determine a variety of information regarding tip portion 35 of razor blade 25, such as radius R1 of ultimate tip 45, convexity of the blade bevel in the ultimate tip region, departure angle 55, tip-to-bevel transition 60, tip width (*e.g*., T1-T3), sputtering conditions and deposition materials, sputtered tip shapes, cross-sectional area, tip volume, etc. A two-dimensional representation of tip portion 35 of razor blade 25 *(see, e.g.,* Fig. 7, showing an example graphical representation of a tip portion 735 including an ultimate tip 745 and first and second flanks 736a, 736b that can be generated by the software-based scripts using the spatial information) can also be generated at one of the longitudinal positions L1-L3, based on an average of the first positional data and the second positional data at the particular longitudinal position. In addition, a three-dimensional representation of tip portion 35 of razor blade 25 *(see, e.g.,* Figs. 8A and 8B, showing example graphical representations of a tip portion 835 including an ultimate tip 845 and first and second flanks 836a, 836b that can be generated by the software-based scripts using the spatial information) can be generated based on the first positional data and the second positional data measured at each of the longitudinal positions L1-L3. The three-dimensional representation can be used to generate a Finite Element Analytical model of tip portion 35 of razor blade 25, which can be used to model an interaction of the Finite Element Analytical model against skin *(see, e.g.,* Fig. 9, showing an example Finite Element Analytical model showing a graphical representation of a tip portion 935 of a razor blade interacting against a graphical representation of the skin 965 of a user).

At step 315, the blade characteristics are used to adjust the manufacturing process to improve a design of razor blade 25. In one example, the manufacturing process could be a sharpening process and adjustment of the sharpening process could include changing a pitch of a grinding wheel, creating a new grinding wheel through varied formulations, or changing one or more configurations of a grinding machine. U.S. Patent No. 4,918,617, assigned to the Assignee hereof, describes various possible grinding wheel configurations. In another example, the manufacturing process could be a coating process, such as for hard coating or lubricous coating at least a portion of razor blade 25 using a coating machine. Examples of hard coating processes for razor blades are described in U.S. Patent No. 6,684,513 and an example of Teflon coating for razor blades can be found in U.S. Patent No. 3,071,856.

In this example, adjustment of the coating process could include changing a configuration of the coating machine to accommodate different types of coatings and to deposit optimal coating. In addition to a sharpening process and/or coating process, the manufacturing process could be an electrochemical process, or any combination of manufacturing processes. An example of an electrochemical process is described in U.S. Patent No. 5,983,756.

A method 400 for optimizing blade array 20 of razor cartridge 15 using spatial information, such as that discussed above, for tip portion 35 of razor blade 25 is illustrated in the flow diagram of Fig. 10. While method 400 is described below with respect to symmetric razor blade 25, it should be appreciated that the described method 400 may also be used with asymmetric razor blades 125 and 125', or any other example of an asymmetric razor blade.

At step 405, AFM 200 with probe 205 is used to measure spatial information for tip portion 35 of razor blade 25 by traversing probe 205 across tip portion 35 of razor blade 25, preferably by traversing probe 205 across tip portion 35 in a direction orthogonal to a longitudinal axis 50 of ultimate tip 45 of razor blade 25 and from ultimate tip 45 to 4 micrometers (*e.g*., from 0.5 micrometers to 4 micrometers) on each side of ultimate tip 45. As best shown in Figs. 2 and 4, the spatial information can be obtained by positioning probe 205 at a first longitudinal position L1 along razor blade 25 and measuring first positional data with probe 205 at first longitudinal position L1 and approaching razor blade 25 from a first direction D1 and measuring second positional data with probe 205 at first longitudinal position L1 and approaching razor blade 25 from a second direction D2, opposite the first direction D1. In addition, the spatial information can be obtained by positioning probe 205 at multiple longitudinal positions L1, L2, L3, which are preferably at least 30 nanometers from adjacent longitudinal positions, along razor blade 25 and measuring first positional data with probe 205 at each longitudinal position L1, L2, L3 and approaching razor blade 25 from the first direction D1 and measuring second positional data with probe 205 at each longitudinal position L1, L2, L3 and approaching razor blade 25 from the second direction D2, opposite the first direction D1.

At step 410, one or more processors are used to analyze the spatial information as measured by AFM 200 *(e.g.,* using software-based scripts) to determine one or more characteristics of blade 25. For example, the spatial information can be used to determine a variety of information regarding tip portion 35 of razor blade 25, such as radius R1 of ultimate tip 45, departure angle 55, tip-to-bevel transition 60, tip width *(e.g.,* T1-T3), cross-sectional area, tip volume, etc. A two-dimensional representation of tip portion 35 of razor blade 25 *(see, e.g.,* Fig. 7) can also be generated at one of the longitudinal positions L1-L3, based on an average of the first positional data and the second positional data at the particular longitudinal position. In addition, a three-dimensional representation of tip portion 35 of razor blade 25 *(see, e.g.,* Figs. 8A and 8B) can be generated based on the first positional data and the second positional data measured at each of the longitudinal positions L1-L3. The three-dimensional representation can be used to generate a Finite Element Analytical model of tip portion 35 of razor blade 25, which can be used to model an interaction of the Finite Element Analytical model against skin *(see, e.g.,* Fig. 9).

At step 415, the blade characteristics are used to adjust a design characteristic of blade array 20 to improve a design of razor cartridge 15. In one non-limiting example, the design characteristic could be an arrangement of blade array 20 in razor cartridge 15, such as the distance between blades, or an arrangement of razor blades 25 within blade array. The design characteristic could also be providing an area in the cartridge where a blade having a sharper tip is located. In another non-limiting example, the design characteristic could be a surface roughness. In yet another non-limiting example, the design characteristic could be a damage assessment. The profile, type of blade steel, or type of coating(s) of the razor blade may be needed to be changed if the surface is deemed too rough or if after a damage assessment, the coatings are deemed too fragile. Some examples of the adjustment of some of these design characteristics to improve the design of the razor cartridge are described in U.S. Patent No. 7,882,640 and U.S. Patent Publication No. 2007/0227008.

The invention is defined by the appended claims.

## Claims

1. A method of optimizing a manufacturing process using spatial information for a tip portion (35) of a razor blade (25), comprising the steps of:
measuring, using an atomic force microscope (200) including a probe (205) having a high aspect ratio of a length (210) to a half side angle (215) and a probe tip (220) with a radius (R2) less than a radius (R1) of an ultimate tip (45) of the tip portion (35) of the razor blade (25), the spatial information of the tip portion (35) of the razor blade (25) by traversing the probe (205) across the tip portion (35) of the razor blade (25);
analyzing, by one or more processors, the spatial information as measured by the atomic force microscope (200), to determine one or more blade characteristics; and
using the blade characteristics to adjust the manufacturing process to improve a design of the razor blade (25).

2. The method of claim 1, wherein the radius (R2) of the probe tip (220) is less than or equal to 1/3 the radius (R1) of the ultimate tip (45) of the razor blade (25).

3. The method of either claim 1 or 2, wherein the probe (205) is traversed across the tip portion (35) of the razor blade (25) in a direction orthogonal to a longitudinal axis (50) of the ultimate tip (45) of the razor blade (25).

4. The method of any one of the preceding claims, wherein the step of measuring comprises traversing the probe (205) from the ultimate tip (45) to 4 micrometers on each side of the ultimate tip (45).

5. The method of any one of the preceding claims, comprising the step of positioning the probe (205) at a first longitudinal position (L1) along the razor blade (25); wherein the step of measuring includes measuring first positional data with the probe (205) at the first longitudinal position (L1) and approaching the razor blade (25) from a first direction (D1) and measuring second positional data with the probe (205) at the first longitudinal position (L1) and approaching the razor blade (25) from a second direction (D2), opposite the first direction (D1).

6. The method of claim 5, wherein the step of analyzing comprises generating a two-dimensional representation of the tip portion (35) of the razor blade (25) at the first longitudinal position (L1) based on an average of the first positional data and the second positional data.

7. The method of any one of the preceding claims, comprising the step of positioning the probe (205) at multiple longitudinal positions (L1, L2, L3) along the razor blade (25); wherein the step of measuring includes measuring first positional data with the probe (205) at each longitudinal position (L1, L2, L3) approaching the razor blade (25) from a first direction (D1) and measuring second positional data with the probe (205) at each longitudinal position (L1, L2, L3) approaching the razor blade (25) from a second direction (D2), opposite the first direction (D1).

8. The method of claim 7, wherein each longitudinal position (L1, L2, L3) is at least 30 nanometers from adjacent longitudinal positions.

9. The method of claim 7, wherein the step of analyzing comprises generating a three-dimensional representation of the tip portion (35) of the razor blade (25) based on the first positional data and the second positional data measured at the multiple longitudinal positions (L1, L2, L3).

10. The method of claim 9, wherein the step of analyzing comprises generating a Finite Element Analytical model of the tip portion (35) of the razor blade (25) and modeling an interaction of the Finite Element Analytical model against skin.

11. The method of any one of the preceding claims, wherein the step of analyzing comprises determining at least one of: a radius (R1) of the ultimate tip (45), a departure angle (55), a tip-to-bevel transition (60), a tip width (T1, T2, T3), a cross-sectional area, or a tip volume.

12. The method of any one of the preceding claims, wherein the radius (R2) of the probe tip (220) ranges up to 7 nanometers.

13. The method of any one of the preceding claims, wherein the aspect ratio is at least 1 micron per degree.

14. The method of any one of the preceding claims, wherein the manufacturing process is a sharpening process, a coating process, an electrochemical process, or any combination thereof.

15. The method of claim 14, wherein the adjustment to the sharpening process comprises at least one of: changing a pitch of a grinding wheel, creating a new grinding wheel, or changing a configuration of a grinding machine.

## Patentansprüche

1. Verfahren zum Optimieren eines Herstellungsprozesses unter Verwendung räumlicher Informationen für einen Spitzenabschnitt (35) einer Rasierklinge (25), umfassend die Schritte:
Messen, unter Verwendung eines Rasterkraftmikroskops (200), das eine Sonde (205) einschließt, die ein hohes Seitenverhältnis von einer Länge (210) zu einem halben Seitenwinkel (215) und eine Sondenspitze (220) mit einem Radius (R2) aufweist, der kleiner ist als ein Radius (R1) einer äußersten Spitze (45) des Spitzenabschnitts (35) der Rasierklinge (25), der räumlichen Informationen des Spitzenabschnitts (35) der Rasierklinge (25) durch Führen der Sonde (205) über den Spitzenabschnitt (35) der Rasierklinge (25) hinweg;
Analysieren, durch einen oder mehrere Prozessoren, der räumlichen Informationen, wie durch das Rasterkraftmikroskop (200) gemessen, um eine oder mehrere Klingeneigenschaften zu bestimmen; und
Verwenden der Klingeneigenschaften, um den Herstellungsprozess anzupassen, um ein Design der Rasierklinge (25) zu verbessern.

2. Verfahren nach Anspruch 1, wobei der Radius (R2) der Sondenspitze (220) kleiner als oder gleich 1/3 des Radius (R1) der äußersten Spitze (45) der Rasierklinge (25) ist.

3. Verfahren nach Anspruch 1 oder 2, wobei die Sonde (205) über den Spitzenabschnitt (35) der Rasierklinge (25) hinweg in einer Richtung senkrecht zu einer Längsachse (50) der äußersten Spitze (45) der Rasierklinge (25) geführt wird.

4. Verfahren nach einem der vorstehenden Ansprüche, wobei der Schritt des Messens das Führen der Sonde (205) von der äußersten Spitze (45) bis zu 4 Mikrometern auf jeder Seite der äußersten Spitze (45) umfasst.

5. Verfahren nach einem der vorstehenden Ansprüche, umfassend den Schritt eines Anordnens der Sonde (205) an einer ersten Längsposition (L1) entlang der Rasierklinge (25); wobei der Schritt des Messens das Messen erster Anordnungsdaten mit der Sonde (205) an der ersten Längsanordnung (L1) und ein Annähern an die Rasierklinge (25) aus einer ersten Richtung (D1) und das Messen zweiter Anordnungsdaten mit der Sonde (205) an der ersten Längsanordnung (L1) und das Annähern an die Rasierklinge (25) aus einer zweiten Richtung (D2), die der ersten Richtung (D1) entgegengesetzt ist, einschließt.

6. Verfahren nach Anspruch 5, wobei der Schritt des Analysierens ein Erzeugen einer zweidimensionalen Darstellung des Spitzenabschnitts (35) der Rasierklinge (25) an der ersten Längsanordnung (L1) basierend auf einem Durchschnitt der ersten Anordnungsdaten und der zweiten Anordnungsdaten umfasst.

7. Verfahren nach einem der vorstehenden Ansprüche, umfassend den Schritt des Anordnens der Sonde (205) an mehreren Längspositionen (L1, L2, L3) entlang der Rasierklinge (25); wobei der Schritt des Messens das Messen erster Anordnungsdaten mit der Sonde (205) an jeder Längsanordnung (L1, L2, L3), das Annähern an die Rasierklinge (25) aus einer ersten Richtung (D1) und das Messen zweiter Anordnungsdaten mit der Sonde (205) an jeder Längsanordnung (L1, L2, L3), das Annähern an die Rasierklinge (25) aus einer zweiten Richtung (D2), die der ersten Richtung (D1) entgegengesetzt ist, einschließt.

8. Verfahren nach Anspruch 7, wobei jede Längsposition (L1, L2, L3) wenigstens 30 Nanometer von benachbarten Längsanordnungen entfernt ist.

9. Verfahren nach Anspruch 7, wobei der Schritt des Analysierens das Erzeugen einer dreidimensionalen Darstellung des Spitzenabschnitts (35) der Rasierklinge (25) basierend auf den ersten Anordnungsdaten und den zweiten Anordnungsdaten, die an den mehreren Längspositionen (L1, L2, L3) gemessen wurden, umfasst.

10. Verfahren nach Anspruch 9, wobei der Schritt des Analysierens das Erzeugen eines Finite-Elemente-Analysemodells des Spitzenabschnitts (35) der Rasierklinge (25) und ein Modellieren einer Wechselwirkung des Finite-Elemente-Analysemodells mit der Haut umfasst.

11. Verfahren nach einem der vorstehenden Ansprüche, wobei der Schritt des Analysierens das Bestimmen wenigstens eines umfasst von: einem Radius (R1) der äußersten Spitze (45), einem Abgangswinkel (55), einem Übergang von der Spitze zu der Fase (60), einer Spitzenbreite (T1, T2, T3), einer Querschnittsfläche oder einem Spitzenvolumen.

12. Verfahren nach einem der vorstehenden Ansprüche, wobei der Radius (R2) der Sondenspitze (220) bis zu 7 Nanometer beträgt.

13. Verfahren nach einem der vorstehenden Ansprüche, wobei das Seitenverhältnis wenigstens 1 Mikrometer pro Grad beträgt.

14. Verfahren nach einem der vorstehenden Ansprüche, wobei der Herstellungsprozess ein Schärfprozess, ein Beschichtungsprozess, ein elektrochemischer Prozess oder eine Kombination davon ist.

15. Verfahren nach Anspruch 14, wobei die Anpassung des Schärfprozesses wenigstens eines umfasst von: Ändern eines Grads einer Schleifscheibe, Erstellen einer neuen Schleifscheibe oder Ändern einer Konfiguration einer Schleifmaschine.

## Revendications

1. Procédé d'optimisation d'un processus de fabrication à l'aide d'informations spatiales pour une partie de pointe (35) d'une lame de rasoir (25), comprenant les étapes consistant à :
mesurer, à l'aide d'un microscope à force atomique (200) comportant une sonde (205) ayant un rapport d'aspect élevé entre une longueur (210) et un angle demi-latéral (215) et une pointe de sonde (220) avec un rayon (R2) inférieur à un rayon (R1) d'une pointe ultime (45) de la partie de pointe (35) de la lame de rasoir (25), les informations spatiales de la partie de pointe (35) de la lame de rasoir (25) en faisant passer la sonde (205) à travers la partie de pointe (35) de la lame de rasoir (25) ;
analyser, par un ou plusieurs processeurs, les informations spatiales telles que mesurées par le microscope à force atomique (200), pour déterminer une ou plusieurs caractéristiques de lame ; et
utiliser les caractéristiques de lame pour ajuster le processus de fabrication pour améliorer une conception de la lame de rasoir (25).

2. Procédé selon la revendication 1, dans lequel le rayon (R2) de la pointe de sonde (220) est inférieur ou égal à 1/3 du rayon (R1) de la pointe ultime (45) de la lame de rasoir (25).

3. Procédé selon la revendication 1 ou 2, dans lequel la sonde (205) est passée à travers la partie de pointe (35) de la lame de rasoir (25) dans une direction orthogonale à un axe longitudinal (50) de la pointe ultime (45) de la lame de rasoir (25).

4. Procédé selon l'une quelconque des revendications précédentes, dans lequel l'étape consistant à mesurer comprend le passage de la sonde (205) depuis la pointe ultime (45) jusqu'à 4 micromètres de chaque côté de la pointe ultime (45).

5. Procédé selon l'une quelconque des revendications précédentes, comprenant l'étape consistant à positionner la sonde (205) à une première position longitudinale (L1) le long de la lame de rasoir (25) ; dans lequel l'étape consistant à mesurer comporte la mesure de premières données positionnelles avec la sonde (205) à la première position longitudinale (L1) et l'approche de la lame de rasoir (25) depuis une première direction (D1) et la mesure de secondes données positionnelles avec la sonde (205) à la première position longitudinale (L1) et l'approche de la lame de rasoir (25) depuis une seconde direction (D2), opposée à la première direction (D1).

6. Procédé selon la revendication 5, dans lequel l'étape consistant à analyser comprend la génération d'une représentation bidimensionnelle de la partie de pointe (35) de la lame de rasoir (25) à la première position longitudinale (L1) en fonction d'une moyenne des premières données positionnelles et des secondes données positionnelles.

7. Procédé selon l'une quelconque des revendications précédentes, comprenant l'étape consistant à positionner la sonde (205) à de multiples positions longitudinales (L1, L2, L3) le long de la lame de rasoir (25) ; dans lequel l'étape consistant à mesurer comporte la mesure de premières données positionnelles avec la sonde (205) à chaque position longitudinale (L1, L2, L3) en approchant la lame de rasoir (25) depuis une première direction (D1) et la mesure de secondes données positionnelles avec la sonde (205) à chaque position longitudinale (L1, L2, L3) en approchant la lame de rasoir (25) depuis une seconde direction (D2), opposée à la première direction (D1).

8. Procédé selon la revendication 7, dans lequel chaque position longitudinale (L1, L2, L3) est à au moins 30 nanomètres de positions longitudinales adjacentes.

9. Procédé selon la revendication 7, dans lequel l'étape consistant à analyser comprend la génération d'une représentation tridimensionnelle de la partie de pointe (35) de la lame de rasoir (25) en fonction des premières données positionnelles et des secondes données positionnelles mesurées aux multiples positions longitudinales (L1, L2, L3).

10. Procédé selon la revendication 9, dans lequel l'étape consistant à analyser comprend la génération d'un modèle analytique par éléments finis de la partie de pointe (35) de la lame de rasoir (25) et la modélisation d'une interaction du modèle analytique par éléments finis contre la peau.

11. Procédé selon l'une quelconque des revendications précédentes, dans lequel l'étape consistant à analyser comprend la détermination d'au moins l'un parmi : un rayon (R1) de la pointe ultime (45), un angle de départ (55), une transition pointe-biseau (60), une largeur de pointe (T1, T2, T3), une aire en coupe transversale, ou un volume de pointe.

12. Procédé selon l'une quelconque des revendications précédentes, dans lequel le rayon (R2) de la pointe de sonde (220) va jusqu'à 7 nanomètres.

13. Procédé selon l'une quelconque des revendications précédentes, dans lequel le rapport d'aspect est d'au moins 1 micromètre par degré.

14. Procédé selon l'une quelconque des revendications précédentes, dans lequel le processus de fabrication est un processus d'affûtage, un processus de revêtement, un processus électrochimique, ou l'une quelconque combinaison de ceux-ci.

15. Procédé selon la revendication 14, dans lequel l'ajustement du processus d'affûtage comprend au moins l'un parmi : la modification d'un pas d'une roue de meulage, la création d'une nouvelle roue de meulage, ou la modification d'une configuration d'une meuleuse.
